# EUROPÄISCHE PATENTANMELDUNG

(11) **EP 0 982 885 A2**
(43) Veröffentlichungstag der Anmeldung: **01.03.2000**
(21) Anmeldenummer: 99111199.8
(22) Anmeldetag: 09.06.1999
(51) Int. Cl.: H04H 1/00, H03J 1/00, G08G 1/09, G01S 1/02, G01C 21/20

(54) **Elektronisches Gerät zum Anschluss an einen zum Empfang von Radio-Daten geeigneten Rundfunkempfänger und Verfahren zur Darstellung von von einem elektronischen Gerät abgegebenen, optisch darstellbaren Informationen**

(30) Priorität: 27.08.1998 DE 19838960
(71) Anmelder: ROBERT BOSCH GMBH, 70442 Stuttgart (DE)
(72) Erfinder: Hatscher, Werner, 31180 Giesen (DE); Debertin, Ansgar, 31139 Hildesheim (DE)

(57) **Zusammenfassung**

Es werden ein elektronisches Gerät (10) zum Anschluß an einen zum Empfang von Radio-Daten geeigneten Rundfunkempfänger (50), insbesondere einen Rundfunkempfänger für ein Kraftfahrzeug und ein Verfahren zur Darstellung von von einem elektronischen Gerät abgegebenen, optisch darstellbaren Informationen auf der Anzeige (70) eines zum Empfang von Radio-Daten geeigneten Rundfunkempfängers vorgeschlagen, wobei die von einer Komponente (25) des elektronischen Geräts (10) abgegebenen optisch darstellbaren Informationen in einem Coder (20) in das Radio-Daten-Format umgesetzt und nachfolgend in einem Modulator (15) einer Rundfunksendefrequenz, vorzugsweise in Form einer Frequenzmodulation, aufmoduliert werden. Bei an den Antenneneingang (75) des Rundfunkempfängers (50) angeschlossenem elektronischen Gerät (10) und nach Abstimmung des Empfangsteils (55) des Rundfunkempfängers (50) auf die von dem elektronischen Gerät (10) modulierte Rundfunksendefrequenz werden die im Stereo-Multiplexsignal enthaltenen optisch darstellbaren Informationen mittels des Decoders (65) aus dem Radio-Daten-Signal isoliert und an der Anzeigeeinheit (70) des Rundfunkempfängers (50) dargestellt.

Damit ist auf einfache Weise der Anschluß eines elektronischen Zusatzgeräts (10) an einen herkömmlichen Radio-Daten-Empfänger (50) unter gleichzeitiger Nutzung der Anzeigeeinheit (70) des Rundfunkempfängers zur Anzeige von von dem elektronischen Gerät (10) erzeugten Informationen möglich.

## Beschreibung

### Stand der Technik

Die Erfindung geht von einem elektronischen Gerät zum Anschluß an einen zum Empfang von Radio-Daten geeigneten Rundfunkempfänger, insbesondere einen Rundfunkempfänger für ein Kraftfahrzeug, und einem Verfahren zur Darstellung von von einem elektronischen Gerät abgegebenen, optisch darstellbaren Informationen auf der Anzeigeeinheit eines zum Empfang von Radio-Daten geeigneten Rundfunkempfängers nach der Gattung der unabhängigen Patentansprüche aus.

Gemäß den "Specifications of the Radio Data System RDS for VHF/FM Sound Broadcasting" der European Broadcasting Union vom März 1984 werden über Rundfunksendefrequenzen von Rundfunksendern neben den eigentlichen Rundfunkprogrammen weitere Informationen in Form von digitalen Daten, wie beispielsweise Programmkettenkennungen (program identification PI) übermittelt, mit denen ein zum Empfang dieser Daten geeigneter Rundfunkempfänger eine Vielzahl von, insbesondere für einen ungestörten Empfang notwendigen Operationen selbständig und automatisiert ausführen kann, so daß beispielsweise der Fahrer eines Kraftfahrzeugs, in das der Rundfunkempfänger eingebaut ist, keine manuellen Eingaben am RDS-Autoradio durchführen muß und somit seine Aufmerksamkeit voll auf den Straßenverkehr konzentrieren kann. Ferner werden im Rahmen des Radio-Daten-Systems (RDS) Informationen übertragen, die auf einer Anzeige des RDS-Rundfunkempfängers dem Benutzer, bzw. im Falle eines Autoradios dem Kraftfahrzeugführer mitgeteilt werden. Ein Beispiel für eine solche, mittels des Radio-Daten-Signals übertragene, auf dem Display eines RDS-Rundfunkempfängers angezeigte Information, ist der Programmname (Programme Service Name PS) des über die aktuell empfangene Sendefrequenz übertragenen Rundfunkprogramms, wie beispielsweise das Kürzel NDR2 für das zweite Hörfunkprogramm des Norddeutschen Rundfunks oder SR1 für das erste Hörfunkprogramm des Saarländischen Rundfunks.

Es sind, beispielsweise aus dem Prospekt der Fa. Blaupunkt "Programm '97/'98 - Sound- und Fahrvergnügen pur. Mobile Kommunikation von Blaupunkt." zum Empfang von Radio-Daten geeignete Rundfunkempfänger in Form von RDS-Autoradios bekannt, die ein Empfangsteil zur Einstellung, zum Empfang und zur Demodulation einer zu empfangenden Rundfunksendefrequenz, einen Decoder für neben einem Rundfunkprogramm über eine empfangene Rundfunksendefrequenz übertragene Radio-Daten und eine Anzeigeeinheit zur Darstellung von Informationen umfassen, und die einen mittels des Radio-Daten-Systems in kodierter Form übertragenen Programmnamen eines aktuell empfangenen Rundfunkprogramms in Form von Klartext auf ihrem Display anzeigen.

### Vorteile der Erfindung

Ein erfindungsgemäßes elektronisches Gerät und das erfindungsgemäße Verfahren mit den Merkmalen der unabhängigen Patentansprüche ermöglichen nun auf einfache Weise eine Nachrüstung eines bestehenden RDS-Rundfunkempfängers mit einem elektronischen Zusatzgerät, wobei für von dem nachgerüsteten Gerät abgegebene, optisch anzuzeigende Informationen in vorteilhafter Weise die Anzeige des Rundfunkempfängers mit genutzt werden kann. Somit kann eine separate Anzeige für das nachgerüstete elektronische Zusatzgerät eingespart werden, was insbesondere beim Betrieb des elektronischen Geräts in einem Kraftfahrzeug, dessen einsehbarer Armaturenbrettbereich oftmals schon mit einer Vielzahl von Bedien- und Anzeigeelementen belegt ist, von besonderem Vorteil ist, da kein zusätzlicher Bereich des Armaturenbretts durch das hiermit entbehrliche zusätzliche Display für das elektronische Gerät verdeckt wird. Darüber hinaus werden auch die Kosten für eine zusätzliche Anzeigeeinheit eingespart.

In vorteilhafter Weise ist an den bekannten Rundfunkempfänger ein Ortungs- oder Navigationssystem anschließbar, so daß über die Anzeigeeinheit des Rundfunkempfängers Daten über den aktuellen Standort des Fahrzeugs oder Fahrtanweisungen zur Leitung eines Kraftfahrzeugführers bzw. Start- und/oder Zielinformationen für eine zurückzulegende Fahrtstrecke angezeigt werden können.

Weiterhin ist es von Vorteil, wenn die von dem elektronischen Gerät abgegebenen Informationen anstelle des üblicherweise mittels des Radio-Daten-Systems übertragenen Programmnamens (PS) in dem von dem Coder des elektronischen Geräts erzeugten Radio-Daten-Signal übertragen werden, da eine Klartextanzeige des mittels des Radio-Daten-Systems übertragenen Programmnamens bei RDS-Rundfunkempfängern nach dem Stand der Technik ohnehin vorgesehen ist, so daß zur Darstellung der von dem elektronischen Gerät abgegebenen Informationen kein weiterer schaltungstechnischer Aufwand erforderlich ist.

### Zeichnungen

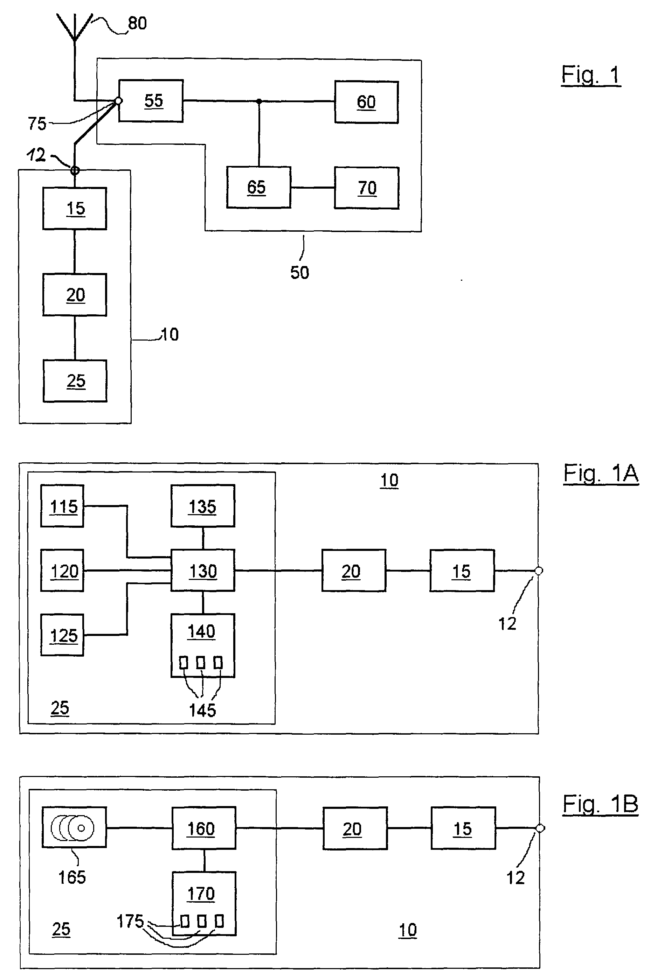

Ausführungsbeispiele der Erfindung sind in den Zeichnungen dargestellt und werden im folgenden näher erläutert.
Es zeigen Figur 1 schematisch eine Anordnung, bestehend aus einem herkömmlichen RDS-Rundfunkempfänger und einem daran angeschlossenen elektronischen Gerät,
Figur 1 A ein Blockschaltbild eines Navigationssystems als an den RDS-Rundfunkempfänger anzuschließendes elektronisches Gerät,
Figur 1 B das Blockschaltbild eines Compact-Disc-Abspielgerätes als weiteres Beispiel für ein an den RDS-Rundfunkempfänger anzuschließendes elektronisches Zusatzgerät,
Figur 2 schematisch eine Gruppe des RDS-Signals und
Figur 3 schematisch das Spektrum des einer Rundfunksendefrequenz aufmodulierten Stereo-Multiplexsignals mit darin enthaltenem RDS-Signal.

### Beschreibung der Ausführungsbeispiele

Figur 1 zeigt schematisch eine Anordnung aus einem zum Empfang von Radio-Daten geeigneten Rundfunkempfänger 50, im vorliegenden Fall einem RDS-Autoradio, und einem elektronischen Gerät 10, das optisch darstellbare Informationen abgibt und ausgangsseitig mit dem Antennenanschluß 75 des Rundfunkempfängers 50 verbunden ist. Der Rundfunkempfänger 50 verfügt über ein Empfangsteil 55, an dessen Antennenanschlußbuchse 75 eine Antenne 80 angeschlossen ist, und das in bekannter Weise über die zur Einstellung, zum Empfang und zur Demodulation einer zu empfangenden Rundfunksendefrequenz erforderlichen Mittel verfügt. Das am Ausgang des Empfangsteils 55 anstehende Stereo-Multiplexsignal ist einer Wiedergabeeinheit 60 zugeführt, die über die zur Wiedergabe der im Stereo-Multiplexsignal enthaltenen Audiosignal-Informationen, wie einen Stereo-Decoder zur Ableitung der Audiosignale für den linken und den rechten Stereokanal, einen Niederfrequenzverstärker zur Verstärkung der wiederzugebenden Audiosignale und daran angeschlossene Lautsprecher verfügt. Außerdem ist das Stereo-Multiplexsignal einem Decoder 65 zugeführt, der aus dem Stereo-Multiplexsignal das im vorliegenden Fall mittels des Radio-Daten-Systems übertragene Radio-Daten-Signal herausfiltert, dekodiert und aus dem Radio-Datensignal die Programmnamen-Information isoliert und einer Anzeigeeinheit 70 zuführt. Bei der Anzeigeeinheit 70 handelt es sich um das bei modernen Autoradios übliche Display mit einem zugehörigen Anzeigentreiber, auf dem die aus dem Radio-Daten-Signal isolierte Programmnameninformation in Form von Klartext, beispielsweise mit dem Kürzel NDR2 für das zweite Programm des Norddeutschen Rundfunks oder SR1 für das erste Programm des Saarländischen Rundfunks, angezeigt wird. Die Anzeigeeinheit 70 des Rundfunkempfängers 50 kann außerdem alternativ oder ergänzend zur Anzeige des Programmnamens auch zur Anzeige weiterer wichtiger Informationen, wie beispielsweise der aktuell empfangenen Rundfunksendefreqnenz oder aktueller und/oder auswählbarer Betriebszustände diverser Komponenten des Autoradios, beispielsweise des in das Autoradiogehäuse integrierten Kasettenabspielgerätes oder Compakt-Disc-Abspielgerätes, vorgesehen sein.

An die Antennenanschlußbuchse 75 des Rundfunkempfängers 50 ist neben der Antenne 80 oder auch alternativ zu derselben das erfindungsgemäße elektronische Gerät 10 angeschlossen.

Dieses umfaßt eine Komponente 25, die optisch darstellbare Informationen, insbesondere Textdaten, oder auch andere Symbole oder Zeichenfolgen abgibt. Alternativ dazu kann jedoch auch vorgesehen sein, daß die Komponente 25 optische Informationen in Form von Pixelgrafiken erzeugt, was seitens des Rundfunkemfängers eine zur Anzeige dieser Informationen geeignete Anzeigevorrichtung erfordert. Die von der Komponente 25 des elektronischen Geräts 10 abgegebenen Informationen werden einem Coder 20 zugeführt, der die Informationen in das Radio-Daten-Format, im vorliegenden Fall in das Format des RDS-Signals umsetzt. Das vom Coder erzeugte, kodierte Informationssignal wird schließlich einem Modulator 15 zugeführt, der eine vorgegebene, oder auch vom Benutzer des Geräts wählbare Rundfunksendefrequenz mit den durch den Coder kodierten Informationen moduliert und somit ein seitens des Empfangsteils 55 des Rundfunkempfängers 50 demodulierbares Rundfunksignal erzeugt.

Um zu verhindern, daß das von dem elektronischen Gerät 10 generierte, das RDS-Signal enthaltende Rundfunksignal über die Empfangsantenne 80 abgestrahlt wird, ist das elektronische Gerät 10 über eine an sich als power combiner bekannte und in der Zeichnung nicht dargestellte, Schaltungsanordnung mit der Antennenanschlußbuchse 75 des Rundfunkempfängers 50 verbunden. Die genannte Schaltungsanordnung verhindert eine Einspeisung des durch. das elektronische Gerät generierten Rundfunksignals in die Empfangsantenne 80 und leitet dieses selektiv an den Antenneneingang des Empfangsteils 55 zur Weiterverarbeitung in demselben weiter.

Bei einem ersten Ausführungsbeispiel der Erfindung handelt es sich bei dem elektronischen Gerät 10 zum Anschluß an den Rundfunkempfänger 50 um ein Ortungssystem, mit einer Ortungskomponente 25. Die Komponente 25 ihrerseits umfaßt eine Einrichtung 115 zur Bestimmung der aktuellen Position des Ortungssystem, bei der es sich bei vorliegendem Fall um einen an sich bekannten GPS-(Global Positioning System-)Empfänger zur Ableitung einer Positionsinformation aus den von den dafür vorgesehenen Satelliten abgestrahlten GPS-Signalen handelt. Der GPS-Empfänger 115 ist mit einer Steuerung 130 verbunden, die die vom GPS-Empfänger ermittelten Positionsdaten in optisch darstellbare Informationen, wie beispielsweise die Zahlenwerte der Längen- und Breitengrade umsetzt. Die Steuerung 130 dient darüber hinaus in Verbindung mit der mit ihr verbundenen Eingabeeinheit 140, die wiederum ihrerseits Bedienelemente 145, im vorliegenden Fall in Form von Drucktasten umfaßt, der Bedienung und Steuerung des Ortungssystems 10. Die optisch darstellbaren, von der Steuerung 130 abgegebenen Informationssignale sind dem Coder 20 zur Umsetzung der Informationen in das Radio-Datenformat zugeführt, dessen Ausgangssignal in dem Modulator 15 einer Rundfunksendefrequenz in Form einer Frequenzmodulation aufmoduliert wird, wonach das modulierte Signal an der Anschlußbuchse 12 des Ortungssystems ansteht. Die Anschlußbuchse 12 des Ortungssystems ist mit der Antennenanschlußbuchse 75 des Rundfunkempfängers, im vorliegenden Fall über ein Koaxialkabel, verbunden.

Gemäß einem zweiten Ausführungsbeispiel der vorliegenden Erfindung handelt es sich bei dem elektronischen Gerät 50 um ein Navigationssystem 10, wobei es sich bei dem von der Navigationskomponente 25 des Navigationssystems 10 abgegebenen optisch darstellbaren Informationen zum einen um die über die Bedienelemente der Bedieneinheit 140 eingegebenen Daten des Navigations-Start- und -Zielortes für eine zurückzulegende Fahrstrecke und darüber hinaus während des eigentlichen Navigationsbetriebs um Fahrtanweisungen zur Leitung eines Fahrzeugführers handelt. Die Navigationskomponente 25 verfügt über Radsensoren 120 zur Ermittlung einer zurückgelegten Fahrtstrecke und über einen Kompaß 125 zur Bestimmung der Fahrtrichtung, die jeweils an die Steuerung 130 angeschlossen sind. Im Falle einer zusätzlich satellitengestützten Navigation verfügt die Navigationskomponente 25 außerdem über einen an sich bekannten GPS-Empfänger, mittels dessen Ausgangsdaten, die durch die Sensoren 120 und 125 ermittelten Positionsdaten korrigiert werden können. Neben der Bedieneinheit 140 ist die Steuerung 130 auch mit einem Landkartenspeicher 135, beispielsweise in Form einer optischen Speicherplatte (CD-ROM) verbunden, wobei die Steuerung unter Zuhilfenahme der zurückzulegenden, durch Eingabe von Start- und Zielort festgelegten Fahrtstrecke, der aktuellen Positionsdaten, der von den Radsensoren und dem Kompaß erzeugten Fahrtdaten und den Landkartendaten Navigationsanweisungen zur Leitung eines Fahrzeugführers erzeugt. Die optisch darstellbaran Fahrtanweisungen, beispielsweise "nach 100 m rechts", werden mittels des Coders 20 in das Radio-Datenformat umgesetzt und mittels des Modulators 15 einer Rundfunksendefrequenz in Form einer Frequenzmodulation aufmoduliert. Die solchermaßen aufbereiteten Informationen, die an der Anschlußbuchse 12 des Navigationssystems 10 zur Verfügung stehen, werden über die Antennenanschlußbuchse 75 des Rundfunkempfängers 50 in diesen eingespeist.

Bei einem dritten, in Figur 1 B dargestellten Ausführungsbeispiel handelt es sich bei dem elektronischen Gerät 10 um ein Compakt-Disc-Abspielgerät, wobei die informationenerzeugende Komponente 25 den eigentlichen CD-Spieler 165, im vorliegenden Fall mit einem Magazin zur Aufnahme mehrerer CD's, also einen sogenannten CD-Wechsler, weiterhin eine Steuerung 160 und eine mit der Steuerung verbundene Bedieneinheit 170 mit Bedienelementen 175 umfaßt. Die Steuerung 160 dient einerseits der Umsetzung der durch die Bedieneinheit eingegebenen Bedienbefehle in Steuerbefehle zur Steuerung des elektronischen Geräts, weiterhin der Steuerung des CD-Abspielgeräts 165, nämlich beispielsweise der Auswahl einer CD aus dem CD-Magazin des CD-Wechslers, der Auswahl eines bestimmten Musikstücks aus einer CD, der Steuerung des CD-Antriebs sowie der Steuerung des Aufnehmers zum Lesen einer abgespielten CD. Schließlich dient die Steuerung 160 auch zur Abgabe von optisch darstellbaren Informationen in Form von Textzeichen, beispielsweise von Informationen über den aktuellen Betriebszustand des CD-Abspielgeräts 165 oder auch der Darstellung von Bedienbefehlen während der Bedienung des Geräts 10 über Bedienelemente 175 der Bedieneinheit 170. Die von der Komponente 25 erzeugten optisch darstellbaren Informationen werden, wie im Zusammenhang mit dem ersten und zweiten Ausführungsbeispiel beschrieben, dem Coder 20 zur Umsetzung der Informationen in das Radio-Datenformat zugeführt, dessen Ausgangssignal in dem Modulator 15 einer Rundfunksendefrequenz, vorzugsweise in Form einer Frequenzmodulation, aufmoduliert werden.

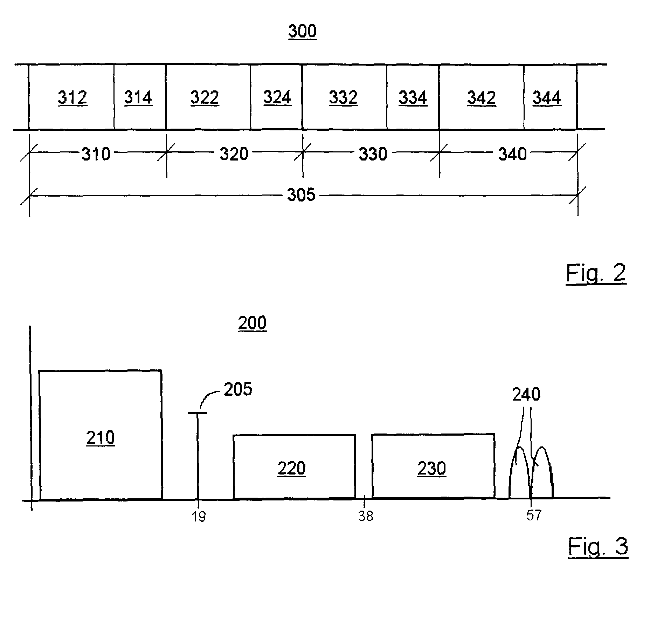

Figur 2 zeigt schematisch einen Ausschnitt aus einem gemäß dem Radio-Daten-System übertragenen Radio-Daten-Signal 100, das gemäß der eingangs erwähnten RDS-Spezifikation in Gruppen 305 zu jeweils 106 Bit unterteilt ist. Jede Gruppe umfaßt ihrerseits wiederum vier Blöcke 310, 320, 330 und 340 zu jeweils 26 Bit, wobei jeder Block jeweils einen Informationsteil 312, 322, 332, 342 und ein sogenanntes Prüfwort mit überlagerten Offsetwort 314, 324, 334, 344 umfaßt. Die eigentlichen, mittels des Radio-Daten-Signals zu übertragenden Informationen sind dabei in den Informationsworten 312, 322, 332 und 342 der Blöcke A, B, C, D (entsprechend den Bezugszeichen 310, 320, 330 und 340) enthalten, während die jeweils 10 Bit langen Prüf- und Offsetwörter 314, 324, 334, 344 eines jeden Blocks der Fehlererkennung und/oder -Korrektur (Prüfwort) sowie der Synchronisierung (Offsetwörter) eines RDS-Rundfunkempfängers auf das Radio-Daten-Signal dienen.

Gemäß der erwähnten RDS-Spezifikation ist es vorgesehen, daß zur Übertragung verschiedener Datenarten bzw. Informationsinhalte verschiedene Gruppentypen mit jeweils gleicher Grundstruktur je nach Bedarf im Radio-Daten-Signal übertragen werden. Als Beispiel sei hierfür der Gruppentyp 0 A genannt, in dessen ersten Block A 310 eine Programmkettenkennung (Program Identification PI) ausgestrahlt wird, die angibt, welches Programm über die gerade empfangene Rundfunk-Sendefrequenz ausgestrahlt wird. Im zweiten Block B 320 der Gruppe 0A werden weitere Informationen wie ein 5 Bit langer Code für den aktuellen Gruppentyp, ein Bit zur Anzeige, ob es sich bei dem aktuell gehörten Rundfunkprogramm um ein Verkehrsnachrichten ausstrahlendes Programm handelt, oder nicht, eine Programmartkennung (Programme Type PTY) zur Angabe der Art (z. B. Pop-Musik, klassische Musik, Nachrichten, Sport,...) des über die aktuell empfangene Sendefrequenz übertragenen Hörfunkprogramms, und weitere wichtige Informationen übertragen. Bezüglich des PI-Codes und der weiteren Informationen bis einschließlich des PTY-Codes sind die in der vorerwähnten RDS-Spezifikation bisher spezifizierten Gruppentypen hinsichtlich ihres Aufbaus identisch. Jedoch. unterscheiden sich die diversen Gruppentypen durch die in. den folgenden Blöcken (C 330 und D 340 übertragenen Informationen). So werden beim Gruppentyp (0A im Block C 330 Informationen über sogenannte alternative Rundfunksendefrequenzen übertragen, wobei diese AF-Listen solche Rundfunkfrequenzen angeben, über die das gleiche Rundfunkprogramm wie über die aktuell am Empfänger eingestellte Sendefrequenz übertragen wird.

Im Block D 340 des Gruppentyps 0A wird schließlich eine Information über den Programmnamen des über die aktuell am Rundfunkempfänger eingestellte Rundfunksendefrequenz übertragenen Rundfunkprogramms übertragen. Der gemäß dem Radio-Daten-System in verschlüsselter Form übertragene Programmname (Programme Service Name PS) besteht gemäß der vorerwähnten RDS-Spezifikation aus bis zu acht numerischen und/oder alphanumerischen Zeichen und ist zur Anzeige auf einer Anzeigevorrichtung eines zur Auswertung des RDS-Signals geeigneten Rundfunkempfängers vorgesehen. Beispiele für einen an der Anzeigevorrichtung eines RDS-Empfängers aufgrund der PS-Information angezeigten Programmnamens sind die Kürzel NDR2 für das zweite Rundfunkprogramm des Norddeutschen Rundfunks oder SR1 für das erste Rundfunkprogramm des Saarländischen Rundfunks.

Der in der RDS-Spezifikation spezifizierte zweite Gruppentyp 0B unterscheidet sich von dem vorerwähnten Gruppentyp 0A durch den Informationsinhalt des Blockes C 330, in dem statt wie beim Gruppentyp 0A AF-Listen hier der PI-Code übertragen wird.

Ein weiterer, zur Durchführung der vorliegenden Erfindung geeigneter Gruppentyp ist beispielsweise der in der RDS-Spezifikation erläuterte Gruppentyp 2 in den Versionen A und B. Dieser umfaßt in seinen Blöcken 0 330 und D 340 bzw. nur in seinem Block D 340, ein sogenanntes Radiotext-Segment, in dem beliebige, von einem Rundfunkempfänger ausgestrahlte Textinformationen übertragen werden können. Bei den zu übertragenden Informationen kann es sich z. B. um Hinweise auf nachfolgende Rundfunksendungen desselben Rundfunkprogramms oder Querverweise auf parallele Rundfunkprogramme derselben Sendeanstalt, Werbetexte oder sonstige Informationen handeln.

Die vorliegende Erfindung macht nun von der Tatsache Gebrauch, daß bei handelsüblichen RDS-Rundfunkempfängern, die beispielsweise aus dem vorgenannten Prospekt der Fa. Blaupunkt bekannt sind, im Rahmen der Gruppentypen 0A und 0B übertragene Programmnameninformationen PS des über die aktuell eingestellte Rundfunksendefrequenz übertragenen Rundfunkprogramms mittels des Decoders 65 aus dem Radio-Daten-Signal isoliert und an der Anzeigeeinheit 70 des Rundfunkempfängers 50 dargestellt werden. Die Erfindung geht von der Überlegung aus, optisch darzustellende Informationen einer Komponente 25 eines erfindungsgemäßen elektronischen Geräts als Programmnameninformation dem Rundfunkempfänger 50 zuzuführen, so daß diese an dessen Anzeigeeinheit 70 dargestellt wird. Dazu wird erfindungsgemäß eine von der Komponente 25 erzeugte oder abgegebene optisch darstellbare Information in dem Coder 20 des elektronischen Geräts 10 an das Radio-Daten-Format angepaßt. Dies geschieht derart, daß im Coder 20 ein Radio-Daten-Signal 300, im vorliegenden Fall bestehend aus Gruppentypen 0A oder 0B, mit den Blöcken A bis D 310 bis 340 erzeugt wird, wobei im Block D 340 statt eines Programmnamens die analog einem Programmnamen gemäß der RDS-Spezifikation kodierte, von der Komponente 25 abgegebene optisch anzuzeigende Information eingesetzt wird.

Dieses vom Coder 20 des elektronischen Geräts 10 erzeugte Radio-Daten-Signal wird mittels des Modulators 15 einer Rundfunksendefrequenz des Ultrakurzwellenbereichs (UKW), vorzugsweise am oberen Ende des UKW-Frequenzbandes, beispielsweise einer Frequenz von 108,0 MHz, in Form einer Frequenzmodulation aufmoduliert, so daß bei an einen Rundfunkempfänger 50 angeschlossenem elektronischen Gerät 10 und nach Abstimmung des Empfangsteils 55 auf die von dem Modulator 15 modulierte Rundfunksendefrequenz die vom Rundfunkempfänger 50 empfangene Rundfunksendefrequenz als eine gewöhnliche RDS-Rundfunksendefrequenz interpretiert wird und die als Programmname im Radio-Daten-Signal übertragene von der Komponente 25 erzeugte optisch darstellbare Information an der Anzeigeeinheit 70 des Rundfunkempfängers dargestellt wird.

Bei einem weiteren Ausführungsbeispiel ist es dagegen vorgesehen, daß die optisch darstellbare Information der Komponente 25 nicht anstelle eines Programmnamens im Gruppentyp 0A bzw. 0B, sondern als Radiotext in den Blöcken C 330 und D 340 des Gruppentyps 2A oder dem Block D 340 des Gruppentyps 2B übertragen wird. Dies setzt seitens des RDS-Empfängers voraus, daß dieser zur Auswertung und zumindest wahlweisen Anzeige von gemäß der RDS-Spezifikation übertragenen Radiotext-Informationen ausgelegt ist.

Ebenso ist es aber auch denkbar, einen neuen, in der RDS-Spezifikation noch nicht belegten Gruppentyp zur Übertragung der von der Komponente 25 abgegebenen, optisch darstellbaren Informationen vorzusehen, wobei auch hier seitens des Rundfunkempfängers 50 vorausgesetzt werden muß, daß dieser zur Isolierung und zur Anzeige solcher Informationen ausgelegt ist.

Beim bereits beschriebenen dritten Ausführungsbeispiel der vorliegenden Erfindung, bei dem das elektronische Gerät 10 ein extern an den Rundfunkempfänger 50 anschließbares CD-Abspielgerät umfaßt, kann es gemäß einer Weiterbildung der Erfindung vorgesehen sein, daß nicht nur die optisch darstellbaren Informationen, die von der Komponente 25 des elektronischen Geräts 10 abgegeben werden, einer Rundfunksendefrequenz aufmoduliert werden, sondern, daß auch die von dem CD-Abspielgerät 165 abgegebenen Audiosignale anstelle eines Rundfunk-Hörfunkprogramms der Rundfunksendefrequenz aufmoduliert werden. Damit können auf einfache Weise die von dem CD-Abspielgerät abgegebenen Audiosignale anstelle eines Hörfunkprogramms, das über eine von einem Rundfunksender abgestrahlte Rundfunksendefrequenz übertragen wird, mittels des Rundfunkempfängers 50 wiedergegeben werden.

Figur 3 zeigt schematisch das Stereo-Multiplexsignal, das einer von einer Rundfunksendestation abgestrahlten Rundfunksendefrequenz aufmoduliert bzw. vom Coder 20 eines CD-Abspielgerätes 10 erzeugt worden ist.

Das dargestellte Spektrum 200 des Stereo-Multiplexsignals enthält in bekannter Weise eine Information über die Audiosignale des linken und des rechten Stereo-Kanals in Form des Summensignals (linker Kanal + rechter Kanal) 210 im Frequenzbereich 0,03 - 15 KHz, des weiteren ein sogenanntes Differenzsignal (linker Kanal - rechter Kanal) das in Form einer Zweiseitenband-Amplitudenmodulation einem Stereohilfsträger von 38 KHz aufmoduliert ist, und in Figur 3 in Form der beiden Seitenbänder 220 und 230 dargestellt ist. Weiterhin enthält das Stereo-Multiplexsignal einen sogenannten Pilotton 205 bei 19 KHz, der u. a. der empfängerseitigen Synchronisation und Rückgewinnung des Stereo-Hilfsträgers von 38 KHz dient. Schließlich enthält das Stereo-Multiplexsignal auch das RDS-Signal 240, das jenseits der übertragenen Audiosignale einem weiteren Hilfsträger von 57 Khz. in Form einer Zweiseitenband-Amplitudenmodulation aufmoduliert ist. Auch der 57 KHz-Hilfsträger wird aus dem Pilotton von 19 Khz abgeleitet.

## Patentansprüche

1. Elektronisches Gerät (10) zum Anschluß an einen zum Empfang von Radio-Daten geeigneten Rundfunkempfänger (50), insbesondere einen Rundfunkempfänger für ein Kraftfahrzeug, der
- ein Empfangsteil (55) zur Einstellung, zum Empfang und zur Demodulation einer zu empfangenden Rundfunksendefrequenz,
- einen Decoder (65) für neben einem Rundfunkprogramm über eine empfangene Rundfunksendefrequenz übertragene Radio-Daten und
- eine Anzeigeeinheit (70) zur Darstellung von Informationen, insbesondere von als Teil der Radio-Daten übertragenen Programmnamen, umfaßt, wobei das elektronische Gerät
- eine Komponente (25), die optisch darstellbare Informationen, insbesondere Textdaten, abgibt, umfaßt, dadurch gekennzeichnet, daß das elektronische Gerät (10) weiterhin
- einen Coder (20) zur Umsetzung der Informationen in das Radio-Daten-Format und
- einen Modulator (15) zur Modulation einer Rundfunksendefrequenz mit den durch den Coder (20) codierten Informationen umfaßt, und daß bei an das Empfangsteil (55) des Rundfunkempfängers (50) angeschlossenem elektronischem Gerät (10) nach Einstellung der durch das elektronische Gerät modulierten Rundfunksendefrequenz am Empfangsteil (55) des Rundfunkempfängers die von der Komponente (25) des elektronischen Geräts (10) abgegebenen Informationen an der Anzeigeeinheit (70) des Rundfunkempfängers darstellbar sind.

2. Elektronisches Gerät nach Anspruch 1, dadurch gekennzeichnet, daß das elektronische Gerät (10) ein Ortungssystem ist, und daß die von dem elektronischen Gerät (10) abgegebenen, optisch darstellbaren Informationen Angaben über die aktuelle Position des elektronischen Geräts sind.

3. Elektronisches Gerät nach Anspruch 1, dadurch gekennzeichnet, daß das elektronische Gerät (10) ein Navigationssystem ist, und daß die von dem elektronischen Gerät (10) abgegebenen, optisch darstellbaren Informationen Fahrtanweisungen zur Leitung eines Fahrzeugführers sind.

4. Elektronisches Gerät nach Anspruch 1 oder 3, dadurch gekennzeichnet, daß das elektronische Gerät (10) ein Navigationssystem ist, und daß die von dem elektronischen Gerät abgegebenen, optisch darstellbaren Informationen Navigations-Start- und -Zieldaten für eine zurückzulegende Fahrtstrecke sind.

5. Elektronisches Gerät nach Anspruch 1, dadurch gekennzeichnet, daß das elektronische Gerät (10) ein Gerät der Unterhaltungselektronik, vorzugsweise eine Audiosignalquelle ist, und daß die von dem elektronischen Gerät (10) abgegebenen, optisch darstellbaren Informationen Angaben über seinen Betriebszustand und/oder auswählbare Betriebszustände sind.

6. Verfahren zur Darstellung von von einem elektronischen Gerät abgegebenen, optisch darstellbaren Informationen auf der Anzeigeeinheit (70) eines zum Empfang von Radio-Daten geeigneten Rundfunkempfängers (50), insbesondere eines RDS-Rundfunkempfängers für ein Kraftfahrzeug, dadurch gekennzeichnet, daß die Informationen mittels eines Coders (20) in das Radio-Daten-Format umgesetzt werden, daß die codierten Informationen mittels eines Modulators (15) einer Rundfunksendefrequenz aufmoduliert werden, daß die modulierte Rundfunksendefrequenz in ein Empfangsteil (55) des Rundfunkempfängers, vorzugsweise über dessen Antenneneingang, eingespeist wird, daß die Rundfunksendefrequenz im Empfangsteil des Rundfunkempfängers demoduliert und aus dem demodulierten Signal in einem Radio-Daten-Decoder (65) des Rundfunkempfängers (50) die Informationen entschlüsselt werden, und daß die entschlüsselten Informationen an einer Anzeigeeinheit (70) des Rundfunkempfängers angezeigt werden.

7. Verfahren nach Anspruch 6, dadurch gekennzeichnet, daß die Informationen anstelle der Programmnamen-Information (PS) im Datenstrom des nach dem Radio-Daten-System (RDS) übertragenen Radio-Datensignals übertragen werden.
